Europäisches Patentamt

European Patent Office

Office européen des brevets

(19)

(11) Numéro de publication: **0 183 595**

**A1**

(12)

# DEMANDE DE BREVET EUROPEEN

(21) Numéro de dépôt: **85402162.3**

(22) Date de dépôt: **08.11.85**

(51) Int. Cl.⁴: **A 23 P 1/08**
**A 23 C 19/16**

(30) Priorité: **09.11.84 FR 8417100**

(43) Date de publication de la demande:
**04.06.86 Bulletin 86/23**

(84) Etats contractants désignés:
**AT BE CH DE GB IT LI LU NL SE**

(71) Demandeur: **BONGRAIN S.A.**
**Le Moulin a vent**
**F-78280 Guyancourt(FR)**

(72) Inventeur: **Jaquet, Vincent**
**118, avenue Foch**
**F-78100 Saint-Germain-En-Laye(FR)**

(74) Mandataire: **Derambure, Christian**
**Cabinet BUGNION ASSOCIES SARL 116, boulevard**
**Haussmann**
**F-75008 Paris(FR)**

(54) **Produit alimentaire nouveau, procédé de fabrication et ligne de fabrication pour sa mise en oeuvre.**

(57) L'invention concerne un produit alimentaire nouveau. Il est constitué d'une composition interne de composés alimentaires humides pouvant avoir tendance à subir une perte d'humidité de l'intérieur vers l'extérieur, à température ambiante; d'une couche de présentation externe, à humidité faible ou inexistante; une couche intermédiaire. La couche intermédiaire (5) est une couche d'enrobage continue et prise en masse à température ambiante, disposée entre la composition interne (2) et la couche externe (3) et dont la fonction est d'empêcher la migration d l'eau de la composition interne (2) vers la couche externe (3).

FIG. 1

EP 0 183 595 A1

Produit alimentaire nouveau, procédé de fabrication et ligne de fabrication pour sa mise en oeuvre.

La présente invention concerne un produit alimentaire nouveau constitué d'une composition interne de produits humides ayant tendance à perdre de l'humidité et d'une couche externe de présentation, le procédé de fabrication d'un tel produit alimentaire et la ligne de fabrication pour la mise en oeuvre du procédé.

On connaît des produits alimentaires qui sont constitués d'une composition très humide et d'une couche de présentation disposée autour de la composition. La couche de présentation est par exemple constituée de miettes de pain ou de poudre fine de poivre ou de toute autre matière finement divisée conférant un aspect esthétique au produit alimentaire et en outre des propriétés organoleptiques. Ainsi on met couramment dans le commerce des tranches de poisson recouvertes d'une composition de chapelure à base de miettes de pain sèches ou à base de farine. Cependant, les tranches de poisson ou de viande ont tendance à perdre un certain pourcentage de sucs liquides qui migrent de l'intérieur vers l'extérieur du produit et viennent humidifier la couche de présentation. De ce fait, celle-ci a tendance à se détacher de la composition interne et en outre a tendance à subir une dégradation par action des microorganismes et moisissures contenus dans l'air. Il s'ensuit donc une détérioration de la couche externe de présentation. Pour remédier à ces inconvénients, les différents fabricants procèdent à une surgélation des produits alimentaires ou au moins à une congélation. Un tel mode de conservation permet de maintenir les sucs du produit alimentaire à l'état solide et donc évite la migration des liquides de l'intérieur vers l'extérieur. En outre, la surgélation ou la congélation permet de maintenir les germes des bactéries et de moisissures à l'état latent et évite la détérioration de la couche de présentation externe.

On a songé par ailleurs à utiliser des colles alimentaires, comme par exemple la gélatine, pour maintenir la couche de présentation parfaitement solidaire du produit alimentaire interne. Cependant, de telles colles n'empêchent pas la migration lente de l'eau.

De plus, les produits alimentaires mis en vente actuellement nécessitent l'utilisation de matières grasses pour leur cuisson. Ainsi, la ménagère, lorsqu'elle désire procéder à la cuisson de tels produits alimentaires doit ajouter dans l'ustensile culinaire, par exemple une poêle, une dose non négligeable de matières grasses telles que de l'huile végétale (arachide, tournesol, etc.) ou animale (beurre, saindoux). Mais, la ménagère a toujours tendance à mettre dans l'ustensile une dose trop importante de matières grasses, ce qui présente de nombreux inconvénients, par exemple entraîne une surcharge en graisse du produit consommé. Ainsi, la diététique recommande une alimentation à base de produits alimentaires à teneur réduite en matières grasses et les consommateurs recherchent de plus en plus des aliments à faible teneur calorique et à taux de graisses réduits.

L'invention vise à pallier ces inconvénients.

Un but de l'invention est de fournir un produit alimentaire constitué d'une composition interne humide, recouverte d'une couche de présentation sèche, pouvant être vendu et conservé à une température positive,par exemple à une température de l'ordre de 10°C ou à la température d'une étagère inférieure d'un réfrigérateur, qui est l'étagère à plus haute température, à savoir aux environs de +4°C.

Un deuxième but de l'invention est de fournir un produit alimentaire ne nécessitant pas pour sa cuisson d'apport supplémentaire de graisse.

Un troisième but de l'invention est de fournir un produit alimentaire dont la couche externe sèche de présentation reste solidaire de la composition interne humide et n'a pas tendance à se détacher de la composition interne ni à se réhumidifier.

A cet effet, l'invention concerne un produit alimentaire nouveau constitué d'une composition interne de composés alimentaires humides, ayant une tendance à perdre de l'humidité de l'intérieur du produit vers l'extérieur à température positive et d'une couche externe de présentation à humidité faible ou inexistante. Un tel produit alimentaire est caractérisé par le fait qu'il comporte une couche intermédiaire disposée entre la composition interne et la couche externe, dont la fonction est d'empêcher la migration de l'exsudat de la composition interne vers la couche externe, la couche intermédiaire étant une couche d'enrobage continue et prise en masse à température ambiante, à savoir entre +4°C et +25°C environ.

Selon l'invention, la couche intermédiaire a pour seconde fonction de réaliser une barrière de protection entre le milieu extérieur et le produit alimentaire interne. Ainsi, la contamination par des germes de l'air ou de l'atmosphère externe, tels que des microorganismes, bactéries,moisissures est évitée grâce à la couche intermédiaire de protection continue et prise en masse.

Le produit alimentaire nouveau est tel que la couche intermédiaire est constituée d'une graisse alimentaire, choisie de préférence dans le groupe formé par le saindoux, la graisse de palme, les huiles végétales hydrogénées, la graisse de cacao, les graisses butyriques, le suif, des graisses fractionnées, hydrolysées ou traitées par tout autre procédé connu et autorisé. La caractéristique commune de ces graisses est qu'elles sont fluides à des températures supérieures à environ 25°C et prises en masse à des températures plus basses. Cette prise en masse n'est pas instantanée et peut intervenir plus ou moins vite. Ainsi, ces graisses présentent un triple avantage. En premier lieu, lorsqu'elles sont à l'état fluide, on peut tremper la composition interne structurée dans un bain de ces graisses, puis la pellicule fluide se trouvant à la surface de la composition interne se prend en masse par refroidissement et si on dépose la couche de présentation discontinue formée de grains sur la pellicule de graisse, celle-ci vient enrober partiellement les grains et assure leur maintien par sa prise en masse. En second lieu, cette couche de graisse est hydrophobe et fait barrière à la migration de l'eau dans les deux sens. En troisième lieu, lorsque le produit fini est soumis à la cuisson, les graisses fondent et une partie vient se déposer sur l'ustensile de cuisson pour assurer la lubrification du produit et éviter qu'il n'attache à l'ustensile.

Enfin, le produit peut comporter en outre une seconde couche intermédiaire, contiguë à la composition interne et constituée, par exemple, d'une farine de céréale. Cette seconde couche intermédiaire a pour fonction, lors de la cuisson du produit, de former une couche dure qui donne une sensation de croquant à la couche externe de présentation.

Le produit selon l'invention est conservé à température positive, sans qu'il n'y ait d'eau qui migre.

L'invention concerne en outre un procédé de fabrication d'un tel produit alimentaire. Ce procédé se caractérise par le fait qu'on enrobe une composition interne humide d'une couche de graisse liquide en trempant la composition dans un bain de graisse liquide, on refroidit la couche de graisse pour la solidifier partiellement de façon suffisante pour qu'elle forme une couche autour de la composition. Cette couche est cependant incomplètement solidifiée afin de recevoir les grains de la couche externe sans que ceux-ci ne la traversent. On évite ainsi que les grains de présentation ne viennent au contact de la composition interne. Puis on continue à refroidir la couche de graisse pour qu'elle se prenne en masse, assure, la fonction de barrage à l'eau et maintienne les grains de la couche externe.

La description suivante, en regard des dessins annexés à titre d'exemples non limitatifs permettra de comprendre comment l'invention peut être mise en pratique.

La figure 1 est une vue    produit alimentaire nouveau en coupe.

La figure 2 est une vue schématique du dispositif pour la fabrication du produit alimentaire.

Le produit alimentaire 1 selon l'invention est constitué d'une composition interne 2 de composés alimentaires. Ces composés ont une certaine forme compacte, par exemple ronde, ovoïde, aplatie, etc. Ils peuvent être un mélange de fromages, une viande, un poisson. Ils ont tendance à subir une perte d'eau de l'intérieur du produit 1 vers l'extérieur, et ce ,à température ambiante. Le produit 1 comporte une couche de présentation 3, externe, à humidité faible ou inexistante. Cettte couche 3 externe est constituée de grains 4, peu ou faiblement jointifs les uns aux autres par exemple.

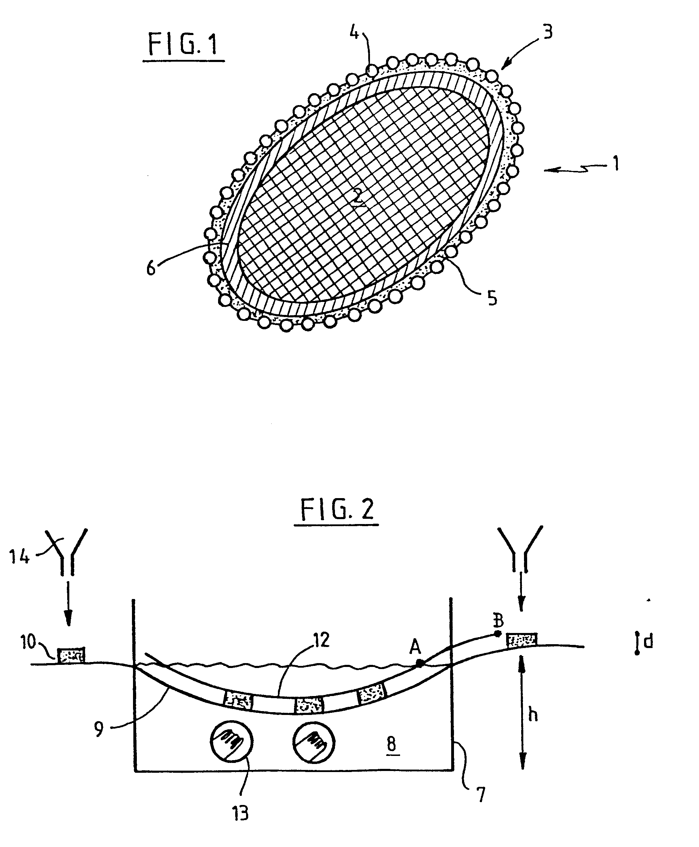

Ces grains peuvent être des grains de chapelure, de poivre, des aromates, etc. Une couche intermédiaire 5 est disposée entre la composition interne 2 et la couche externe 3 constituée de grains 4. Selon l'invention cette couche intermédiaire 5 est une couche continue qui enrobe complètement la composition interne 2 et qui est prise en masse à température ambiante. Sa fonction est d'empêcher la migration de l'eau de la composition interne 2 vers la couche externe 3. Ainsi, la couche intermédiaire 5 constitue une barrière entre la composition 2 et la couche de présentation externe 3. Cette barrière est double. Elle empêche que la couche externe 3 exempte d'humidité soit mouillée par l'eau qui s'échappe de la composition interne 2. Cette eau s'échappe soit du fait d'une pression exercée de l'extérieur vers l'intérieur sur la composition interne soit du fait d'une exsudation. Comme on peut le voir sur la figure 1, la couche externe 3 discontinue est constituée de grains 4 rendus solidaires de la composition interne 2 par la couche intermédiaire 5 qui les enrobe au moins partiellement, du côté interne de la couche de présentation 3. Ainsi, la couche intermédiaire 5 a pour autre fonction de constituer un agent de fixation et de cohésion des grains 4. Ceux-ci sont donc maintenus par la couche intermédiaire 5. De plus, cette couche 5 a pour fonction supplémentaire de constituer une barrière de protection de la composition interne 2 et d'empêcher sa contamination par l'air ambiant extérieur.

Selon l'invention, la couche intermédiaire est constituée d'une graisse alimentaire, choisie parmi le saindoux, la graisse de palme, les huiles végétales hydrogénées, la graisse de cacao, les graisses butyriques et le suif, les graisses fractionnées, hydrolysées ou traitées par tout autre procédé connu et autorisé. Elle peut aussi être constituée d'un mélange d'un ou de plusieurs de ces graisses avec les graisses émulsifiantes et plastifiantes, de la lécithine et des mono- et diglycérides. Ces graisses ou mélanges de graisses sont fluides à des températures supérieures à environ 25°C et prises en masse à des températures plus basses.

Le produit 1 nouveau comporte selon un autre mode de réalisation, une seconde couche intermédiaire 6 contiguë à la composition externe 2 et qui a pour fonction, lorsque le produit est soumis à la cuisson, de former une couche dure. On obtient ainsi un effet de croquant du produit cuit, agréable pour le consommateur. La seconde couche intermédiaire 6 est constituée de préférence d'une farine de céréale, par exemple de blé.

Le procédé de fabrication du produit nouveau 1 est tel que l'on réalise une composition alimentaire 2 par compactage, moulage, cuisson d'un mélange d'aliments, de manière à lui conférer une structure compacte. Puis, on enrobe la composition 2 qui comporte un certain pourcentage d'humidité d'une couche de graisse liquide en trempant la composition 2 dans un bain 7 de graisse 8. La graisse 8 (ou le mélange de graisses) est maintenue à une température telle qu'elle soit fluide,

Puis on refroidit la couche de graisse 8 qui s'est déposée sur la composition 2. Enfin, on revêt la couche de graisse solide 8 d'une couche externe 3 de présentation sensible à l'eau.

Selon l'invention, il est très important de régler la durée de refroidissement de la couche de graisse 8. En effet, si la durée $t$ pendant laquelle la composition 2 sort du bain 7 au point A pour parvenir au point B, point auquel on dépose sur la couche de graisse 8 les grains 4, est trop faible, la graisse 8 n'a pas le temps, du fait qu'elle est soumise à la température ambiante, de se prendre suffisamment en masse. Elle reste trop liquide et lorsque l'on dépose les grains 4, ils ont tendance à percer la couche 5 de graisse qui n'est pas solidifiée suffisamment et de ce fait les grains 4 viennent au contact de la composition 2 qui peut leur communiquer son humidité.

Au contraire, si la durée que met la composition 2 à parcourir le trajet entre les points A et B est trop importante, la graisse est complètement prise en masse au point B et lorsqu'on dépose les grains 4, ils ne sont pas partiellement enrobés par la graisse et ne sont donc pas maintenus et fixés par la couche intermédiaire 5.

La durée entre le point A où la composition 2 sort du bain 7 et le point B où on dépose les grains 4 sur la couche intermédiaire 5 est fonction de plusieurs paramètres, notamment la distance entre les points A et B, la température θ du bain 7 de graisses 8, la hauteur de remplissage du bain 7, la vitesse de déplacement de la composition 2 dans le bain 7. La vitesse de refroidissement dépend également de la température du produit et des traitements thermiques et mécaniques qu'ont pu subir les graisses, ainsi que de la nature des graisses.

Selon un mode préférentiel de l'invention, la température du bain 7 est comprise entre environ 60-100°C. Cette température est préférée car elle permet d'obtenir une pré-cuisson de la seconde couche intermédiaire 6 ainsi qu'une stérilisation superficielle.

La composition 2 est disposée de manière connue sur un tapis roulant 9 à mailles métalliques et en amont au point 10 du bain 7 on dépose sur la composition une couche intermédiaire 6 telle que de la farine provenant de moyens de dépôt d'une poudre par exemple d'une trémie 11. Puis, la composition 2 revêtue est introduite dans le bain 7 de graisse 8 comportant des moyens de chauffage 13. Une grille supérieure 12 est placée au-dessus de la grille 9 pour éviter que les compositions ne surnagent. La grille 9 et la grille 12 sont cintrées. Le produit 2 est sorti du bain 7 au point A et est revêtu de grains de présentation au point B, en aval par la trémie 14.

Enfin, le produit final est emballé.

REVENDICATIONS

1.    Produit alimentaire nouveau constitué d'une composition interne de composés alimentaires humides pouvant avoir tendance à subir une perte d'humidité de l'intérieur vers l'extérieur, à température ambiante; d'une couche de présentation externe, à humidité faible ou inexistante; une couche intermédiaire, caractérisé par le fait que la couche intermédiaire (5) est une couche d'enrobage continue et prise en masse à température ambiante, disposée entre la composition interne (2) et la couche externe (3) et dont la fonction est d'empêcher la migration de l'eau de la composition interne (2) vers la couche externe (3).

2.    Produit alimentaire nouveau selon la revendication 1, caractérisé par le fait que la couche externe 3 de présentation est discontinue et constituée de grains (4) qui sont rendus solidaires de la composition interne par la couche intermédiaire (5) qui les enrobe au moins partiellement, du côté interne de la couche de présentation (3).

3.    Produit alimentaire nouveau selon l'une quelconque des revendications 1 et 2, caractérisé par le fait que la couche intermédiaire (5) a pour seconde fonction de constituer une barrière de protection de la composition interne (2) et d'empêcher sa contamination par l'air ambiant extérieur.

4.    Produit alimentaire nouveau selon l'une quelconque des revendications 1 à 3, caractérisé par le fait que la couche intermédiaire (5) est constituée d'une graisse alimentaire.

5.    Produit alimentaire nouveau selon l'une quelconque des revendications 1 à 4, caractérisé par le fait que la couche intermédiaire (5) est choisie dans le groupe (I) formé par le saindoux, la graisse de palme, les huiles végétales hydrogénées, la graisse de cacao, les graisses butyriques et le suif, les graisses fractionnées, hydrolysées.

6. Produit alimentaire nouveau selon la revendication 5, caractérisé par le fait que la couche intermédiaire (5) est constituée d'un mélange d'au moins une des graisses classées dans le groupe (I ) et des graisses émulsifiantes et plastifiantes, lécithine, mono et diglycérides.

7. Produit alimentaire nouveau selon l'une quelconque des revendications 1 à 6, caractérisé par le fait que la couche intermédiaire (5) est prise en masse à des températures ambiantes.

8. Produit alimentaire nouveau selon l'une quelconque des revendications 1 à 7, caractérisé par le fait que les graisses constituant la couche intermédiaire (5) sont liquides à des températures supérieures à environ 25°C et lorsque le produit est soumis à la cuisson, elles ont pour fonction de réaliser la lubrification du produit.

9. Produit alimentaire nouveau selon l'une quelconque des revendications 1 à 8, caractérisé en ce qu'il comporte en outre une seconde couche intermédiaire (6) contiguë à la composition interne et qui lors de la cuisson a pour fonction de former une couche dure.

10. Produit alimentaire nouveau selon l'une quelconque des revendications 1 à 9, caractérisé par le fait qu'il est conservé à température positive.

11. Procédé de fabrication d'un produit alimentaire nouveau constitué d'une composition interne de composés
alimentaires humides ayant tendance à subir une perte
d'humidité de l'intérieur du produit vers l'extérieur,
à température ambiante, d'une couche externe de présentation à humidité faible ou inexistante; et d'une couche
intermédiaire disposée entre la composition interne et
la couche externe empêchant la contamination de la couche
externe par l'eau migrant de la composition interne vers
la couche externe, caractérisé par le fait qu'on effectue
les étapes suivantes :

a) on introduit la composition (2) dans un bain (7) de
graisse (8) liquide,

b) on sort la composition (2) du bain (7) et on effectue
un refroidissement pour obtenir une première couche
intermédiaire (5) partiellement mise en masse,

c) on dépose les grains (4),

d) on effectue un refroidissement final pour obtenir une
couche intermédiaire (5) complètement prise en masse.

12.    Procédé selon la revendication 11, caractérisé·
par le fait que la température du bain (7) de graisse (8)
est comprise entre 60 et 100°C environ.

13.    Dispositif pour la fabrication d'un produit
alimentaire comportant les organes suivants :

— des moyens de chauffage (13) d'une graisse (8) solide
pour la maintenir à l'état fluide,

— des moyens (9, 12) pour amener une composition (2)
dans la graisse fondue (8),

— des moyens de refroidissement de la graisse fondue
(8) pour l'amener partiellement à une prise en masse
et pour la formation d'une couche d'enrobage autour
de la composition,

- des moyens pour recouvrir la composition (2) recouverte de graisse (8) de grains (4) pour former une couche discontinue de présentation (3),

- des moyens de refroidissement pour la mise en masse totale de la couche (5).

## FIG.1

## FIG.2

Office européen
des brevets

**RAPPORT DE RECHERCHE EUROPEENNE**

Numero de la demande

EP 85 40 2162

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | EP-A-0 091 497 (FRISCO-FINDUS)<br><br>* Revendications 1-7,9,10; exemples 1,4; page 2, lignes 25-28 * | 1-9,11,13 | A 23 P 1/08<br>A 23 C 19/16 |
| Y | | 5,7,10,12 | |
| X | BE-A- 412 898 (J. BURTON)<br><br>* Revendications 1,3,5,6,8; page 3, lignes 1,2 * | 1,3-8,10 | |
| Y | DE-C- 968 175 (K. GERSTORFF)<br><br>* Revendications 1,2; page 2, ligne 54 - page 3, ligne 20 * | 5,7,10,12 | |
| A | GB-A-2 029 687 (S.C.M.)<br>* Revendications 1,5 * | 1-6 | A 23 C<br>A 23 P<br>A 23 L |
| A | US-A-3 904 772 (V. MOEGLE)<br>* Revendication 1 * | 1-4 | |

**DOMAINES TECHNIQUES RECHERCHES (Int. Cl.4)**

---

Le présent rapport de recherche a été établi pour toutes les revendications

| Lieu de la recherche | Date d'achèvement de la recherche | Examinateur |
|---|---|---|
| LA HAYE | 10-02-1986 | DESMEDT G.R.A. |